# EUROPEAN PATENT APPLICATION

(11) **EP 3 023 814 A1**
(43) Date of publication of application: **25.05.2016**
(21) Application number: 14194340.7
(22) Date of filing: 21.11.2014
(51) Int. Cl.: G01V 1/18

(54) **Seismic sensor unit and according emergency shutdown system of a nuclear power plant**

(71) Applicant: Areva NP SAS, 92400 Courbevoie (FR)
(72) Inventor: WEBER, Johannes, DE Poing 85586 (DE); Einzmann, Klaus, DE 91350 Gremsdorf-Buch (DE)
(74) Representative: Kugler, Jörg

(57) **Abstract**

The invention relates to a seismic sensor unit (4) for an emergency shutdown system (2) of a nuclear power plant, comprising
• at least one accelerometer (6) for at least one axis,
• a trigger module (8) which processes a signal derived from a measured signal of said accelerometer (6) and generates an output signal from which a trip signal is derived.

It is an objective of the present invention to provide a reliable, robust, and non-complex seismic sensor unit (4) of such a type. The proposed solution according to the invention is characterized in that said trigger module (8) comprises an analog peak-hold-circuit (18) processing an input signal (X) and generating an output signal (Y) with the following properties:
• if the input signal (X) is rising and the level of the output signal (Y) is below the level of the input signal (X), the output signal (Y) increases almost instantly with the input signal (X),
• if the level of the input signal (X) is below the level of the output signal (Y), the output signal (Y) essentially keeps the current level unless a reset condition is reached.

## Description

The invention relates to a seismic sensor unit for an emergency shutdown system of a nuclear power plant. It also relates to an according emergency shutdown system.

In particular, the invention relates to a seismic sensor unit for an emergency shut-down system of a nuclear power plant, comprising
- at least one accelerometer for at least one axis,
- a trigger module which processes an input signal derived from a measured output signal of said accelerometer and generates an output signal from which a trip signal is derived.

Nuclear power plants usually comprise a reactor protection system with an emergency shutdown system (also called automatic trip system or SCRAM switch) for the nuclear reactor in the event of abnormal operating conditions and/or dangerous environment conditions. Among the possible trip causes increased seismic activity related to or preceding earthquakes is of special interest. To this end, seismic sensors are installed at the site of the plant and integrated into the signal chain of the emergency shutdown system.

However, commercially available off-the-shelf seismic sensors are currently not well suited for integration into a reactor protection system for usage in an automatic trip system. This is due to the fact the the available seismic sensors usually make heavy use of complex electronics (CPUs, FPGAs) and software which makes nuclear qualification difficult.

For example, a seismically-triggered reactor protection system with the features of the preamble of claim 1 is disclosed in CN 101777241 A. In this system analog-to-digital conversion takes place right at the beginning of the signal chain (i.e. directly after the accelerometer) and the subsequent trigger function is implemented digitally.

It is therefore an objective of the present invention to provide a reliable, robust, and non-complex seismic sensor unit with adequate sensitivity for seismic shut-down systems in nuclear power plants. A further objective is to allow for an easy integration of the seismic sensor unit into existing reactor protection systems. Furthermore, an emergency shutdown system of a nuclear power plant which is particularly well suited for the usage of such sensor units shall be provided.

With respect to the seismic sensor unit the above objective is solved by the features of claim 1.

Hence, in a sensor unit according to the invention the trigger module comprises a peak-hold-circuit realized by discrete (preferably analog) electronic components processing an input signal and generating an output signal with the following properties:
- if the input signal is rising and the level of the output signal is below the level of the input signal, the output signal increases almost instantly with the input signal,
- if the level of the input signal is below the level of the output signal, the output signal essentially keeps the current level unless a reset condition is reached.

The reset condition is preferably defined such that the input signal stays below a given threshold for a certain amount of time which lies in the order of seconds. The threshold is chosen such that it is far below a level of seismic activity that is considered critical for the operation of the plant. When the reset condition is reached, the output signal is preferably reset to the level of the input signal (or alternatively to zero).

In practice, due to the underlying implementation with discrete electronic elements, the wording that "the output signal essentially (or almost) keeps the current level" may mean that during these periods the output signal (very) slowly decreases, i.e. with a time constant at least in the order of seconds, preferably greater.

The invention is based on the general idea that the signal processing related to seismic sensor signals in a nuclear power plant can be separated into in a safety-relevant part with non-complex electronics comprising the actual sensing and triggering functions and a non-safety-relevant monitoring part comprising full monitoring functionality with the help of complex electronics and related software.

Thus, the sensor unit according to the invention is implemented with basic electronic components only to ease qualification and to ensure low failures-in-time (FIT) rates. There is no complex electronics apart from the accelerometer itself (if applicable) and no software in this part of the system. Nonetheless, the accel-erometer front-end can easily be adapted to specific accelerometers according to the given needs (simplicity, sensitivity, dynamic range). Smooth integration into the reactor emergency shutdown signal chain in a similar way as other trip causes (e.g. temperature, pressure) is possible.

More specifically, the above-specified peak-hold-circuit can effortlessly be realized with analog means without complex integrated circuits and eases the implementation of a time-window trigger.

The functionality is usually defined so that at least m out of n seismic sensors need to violate a set threshold to trigger a reactor shutdown. As reactor protection systems should be designed as simple as possible, it is desirable to realize such a time-window identical to other trip sources that are e.g. connected with several temperature sensors. The shutdown logic then simply performs a decision whether at least m sensors violate a certain threshold at any given time. This is easy to implement for stationary signals such as temperature or pressure. Due to the overall system's inertia these parameters change only gradually over time. However, earthquake-induced acceleration signals oscillate rapidly, so it cannot be ensured that a simple evaluation like for other physical units such as temperature or pressure really triggers an earthquake as early as possible. Therefore, the above-specified peak-hold function is implemented in the trigger module according to the invention.

If several of such analog triggers are used in parallel in a power plant, a simple voting logic within the reactor protection system can perform the following functionality: The reactor shutdown signal (i.e. trip signal) is only generated if e.g. three seismic triggers generate a trigger signal within one second. With the help of the above-specified peak-hold circuit within every seismic trigger, this function can be implemented by simply combining / adding the currents of all incoming seismic trigger signals and using a threshold-comparator for the sum-signal.

In other words, the invention also provides an emergency shutdown system of a nuclear power plant with a plurality of seismic sensor units as described above, configured such that a trip signal is generated if the sum of the individual output signals exceeds a pre-defined threshold.

Ideally the peak-hold function should ensure the following: After the first peak, the signal is hold at the peak level for a specified time, e.g. for one second. If in the mean-time another peak is detected that is lower than the first peak (and thus the current output signal level), this level is output after the first peak's time interval has passed until one second after the second peak. This means the second peak's level may be output only for a fraction of a second depending on the time passed after the second peak which still belongs to the hold-time of the first peak. After a peak's hold time the capacitor(s) shall be discharged rapidly.

Unfortunately this kind of functionality can hardly be implemented with purely analog means as it requires some form of storage. As following peaks after an initial peak can be very low, analog peak detection logic will not work either.

At this point there is an advantageous refinement of the basic functionality described above in order to better approximate the ideal case. This refinement is characterized such that the decrease of the trigger module's output signal is governed by at least two different time constants, depending on the output signal amplitude. In other words, there are preferably two or more different underlying circuit elements (capacitors or transistors) with different time constants and hence different discharge speeds. The slow discharge speed is used if the overall amplitude of the output signal is above a certain threshold and the fast one for lower amplitudes. This leads to different discharge speeds within a seismic event as the signal may dip temporarily, but this not considered a major problem. This refined functionality can again be implemented without complex digital electronics.

In a preferred embodiment the seismic sensor unit comprises a number of accelerometers for at least two independent horizontal axes, configured such that the magnitude of the vector sum of the horizontal acceleration is at least approximately derived and subsequently processed within the trigger module.

The background for this feature is as follows: The horizontal axes have one spe-cialty - for the structural health assessment it is usually not important to know the x- and y- components separately and define thresholds for a trip signal on each of them, but to use the resulting vector sum of these components. This leads to the problem that two separate thresholds for the x- and y-axes are not desirable as this may lead to an underestimation of an earthquake. If for instance there is a horizontal acceleration vector whose x- and y-component are identical, the length of the resulting vector is about 41.4 % larger than each of the separate components. In this case the trip signal may not be generated automatically by thresholds on each of these separate components but only on the base of the vector sum.

Normally, this number (square root of the sum of squares of the components) can easily be calculated in real-time by seismic sensor boxes that possess some form of computing power such as processors or FPGAs. As in the system according to the invention neither the sensor unit nor the "central part" of the system, namely the reactor protection system should perform digital calculations or possess processors and/or FPGAs, this problem needs to be solved in an analog way within the seismic trigger circuit.

The proposed solution here makes use of a circuit that calculates the approximate magnitude of the vector that is defined by its x- and y- components which are perpendicular to each other. The maximum error of the above mentioned proposal is along the 45-degrees bisecting line. The basic idea is it to add additional auxiliary axes on which the vector is projected to reduce this maximum error. For instance, in a Cartesian coordinate system with perpendicular x- and y-axes a 45-degrees auxiliary axis is introduced. During assessment the greatest of the projections is selected as the result. The inaccuracy depends on the missing angle, i.e. the angle between the vector and the best fitting auxiliary axis.

In mathematical terms the calculation is preferably implemented as a weighted sum of the x- and y-components. Hence, the only required mathematical operations for the approximate assessment of the vector magnitude are addition and multiplication. This is also true for the general case in which the ratio between the weight factors (multipliers) defines the angle of the auxiliary axis with regard to the others.

To optimize this circuit a few improvements can be applied:
- The number of auxiliary axes can be increased to reduce the maximum error. A number of three auxiliary axes may reduce the maximum error to about 2%.
- Instead of the perpendicular axes x and y only equally rotated auxiliary axes may be used to reduce the number of axes at a given maximum error. The resulting weighted sums can be concluded with trigonometric considerations.
- For the given application it may be desirable to design the system in a way to never underestimate but only overestimate the resulting vector.

In summary, the system according to the invention is based on the following key features:
- Non-complex seismic sensor with few components for seismic shutdown systems in nuclear reactors.
- Core components implemented with basic electronic components. Discrete circuit technology is much easier to qualify in nuclear environments in comparison to other available sensors that rely on computing technology (processors, FPGAs).
- Implementation of an adapted peak-hold-circuit that allows it to implement a time-window trigger function by simply combining the outputs of several sensors (voting by "adding" several current or voltage channels).
- Preferably two output channels, one for the vertical component and another for the combined horizontal components.
- Smooth integration into the reactor emergency shutdown signal chain in a similar way as other trip causes (e.g. temperature, pressure).

An exemplary embodiment of the invention is illustrated in the accompanying drawings which depict in a schematic and highly simplified manner:
- FIG. 1: an overview of the central parts of a seismically triggered emergency shutdown system of a nuclear power plant,
- FIG. 2: an input signal and a corresponding output signal as a function of time of a peak-hold circuit used in the system according to FIG. 1,
- FIG. 3: a basic implementation of a peak-hold circuit which realizes a peak-hold function like in FIG. 2, and
- FIG. 4: a sensor box for usage in the system according to FIG. 1.

Likewise parts are depicted with likewise numerals throughout the figures.

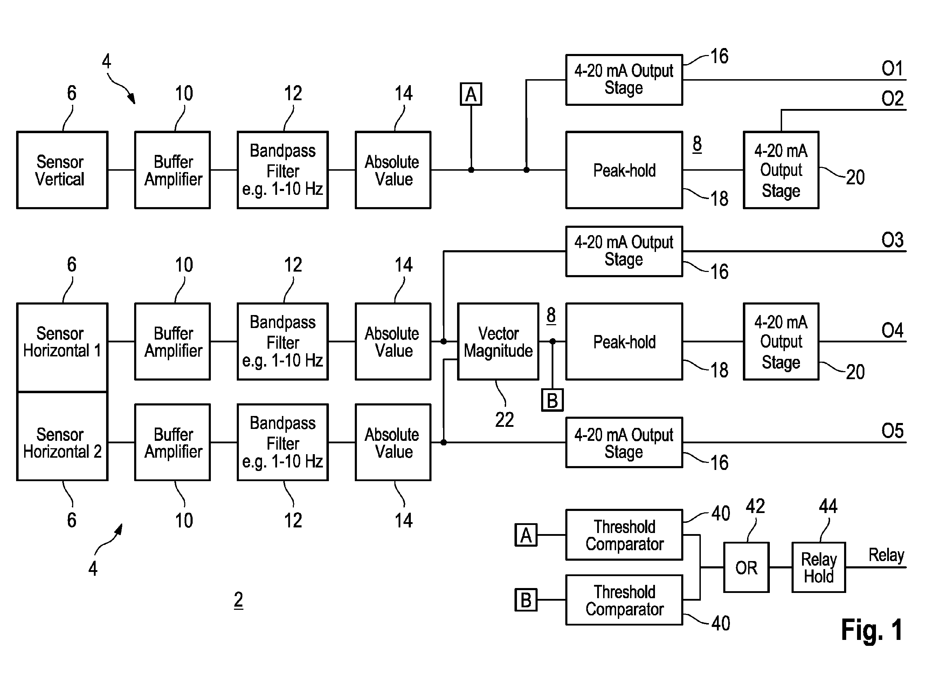

FIG. 1 depicts an excerpt from an emergency shutdown system 2 of a nuclear power plant. It comprises two seismic sensor units 4 in a functionally parallel arrangement. The first one is designed for the measurement of the vertical component of seismic vibrations or displacements and the second one for the horizontal components thereof.

Turning now in more detail to the first sensor unit 4: In the present embodiment the first sensor unit 4 comprises an accelerometer 6 for the vertical axis ("vertical sensor"). For example, a 1-axis accelerometer dedicated to the vertical direction can be used. Alternatively, the vertical output signal of a 3-axis accelerometer aligned accordingly can be used. The accelerometer(s) can either reside within the sensor unit 4 (e.g. as a chip-type MEMS sensor or a piezo sensor) or stay outside while connected with a cable.

The accelerometer 6 provides an input signal which may either represent a voltage, a current or a charge signal to a trigger module 8 arranged subsequently (i.e. downstream) in the signal chain. The whole trigger module 8 only consists of discrete electronic components. Directly after the accelerometer 6 an input stage with a buffer amplifier 10 normalizes the sensor signal e.g. to +/- 2,5 V. This input stage is therefore sensor dependent and needs to be adapted accordingly if different sensors are to be used. The next part is a band-pass filter 12 that ensures that only relevant frequency components are used (e.g. 1 - 10 Hz) for a seismic trigger. It is preferably implemented as an active filtering circuit using operational amplifiers. The next stage consists of an absolute value converter 14 that transforms the +/- 2,5 V to e.g. 0 - 2,5 V. This signal can already be used as a relay output signal after conversion to a 4 - 20 mA signal which is typically processed in according relay contacts. The conversion takes place in an auxiliary output stage 16 (output signal 01).

However, in the preferred embodiment depicted in FIG. 1 the signal leaving the input stage is conditioned further to ease the implementation of a time-window trigger. Therefore the pre-conditioned input signal is fed into an analog peak-hold circuit 18 that has the following properties:
- If the input signal X is rising and the output signal Y is below the input signal X, the level of the output signal Y increases (almost) instantly with the input signal X.
- If the input signal X is below the output signal Y, the output signal Y is (almost) kept at the current value as long as the input signal X does not reach a reset condition.

The reset condition is defined such that the input signal X stays below a given threshold mₜ for a certain (given) amount of time Δt which lies in the order of seconds. The threshold mₜ is preferably higher than the sensor noise and significantly lower than a threshold set to shut-down the nuclear power plant.

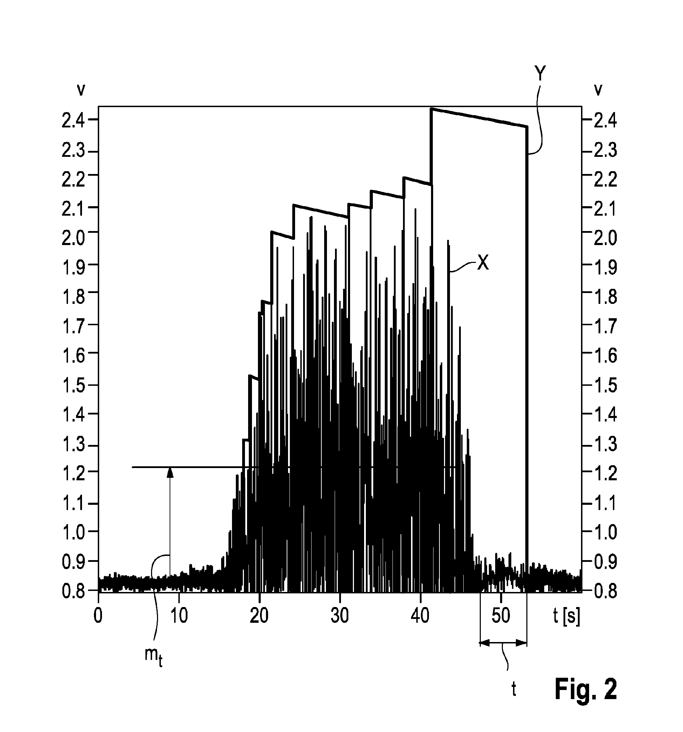

The so-defined characteristic peak-hold function is illustrated schematically in FIG. 2.

As one can see, in practice the output signal Y actually decreases during the time intervals in which it would ideally have a constant value, but only very slowly (much slower than the seismic oscillations represented by the input signal X and also slow in comparison with the reset time Δt).

Within the subsequent output stage 20 the resulting signal is transformed to a 4 - 20 mA signal and provided (as output signal 02) to the reactor protection system (not depicted here). This type of signal can be checked by the reactor protection system if e.g. the power supply of the seismic sensor is interrupted or if the cable is broken. This kind of self-check capability is not possible to implement with a relay interface.

If several of the analog triggers described above are used in parallel in a power plant, a simple voting logic within the reactor protection system can perform the following functionality: The reactor shutdown signal is only generated if e.g. two or three seismic triggers generate a trigger signal within one second. With the help of a peak-hold circuit of the above kind within every seismic trigger, this function can be implemented by simply combining / adding the currents of all incoming seismic trigger signals (here: output signals 02 and 04, see below) and using a current threshold-comparator for the sum signal.

In a refinement to the basic function described above the (slow) decrease of the peak-hold circuit's 18 output signal is governed by two different time constants, depending on the output signal amplitude. The slow discharge speed is used if the overall amplitude is above a certain threshold (e.g. 0,05 g) and the fast one for lower amplitudes.

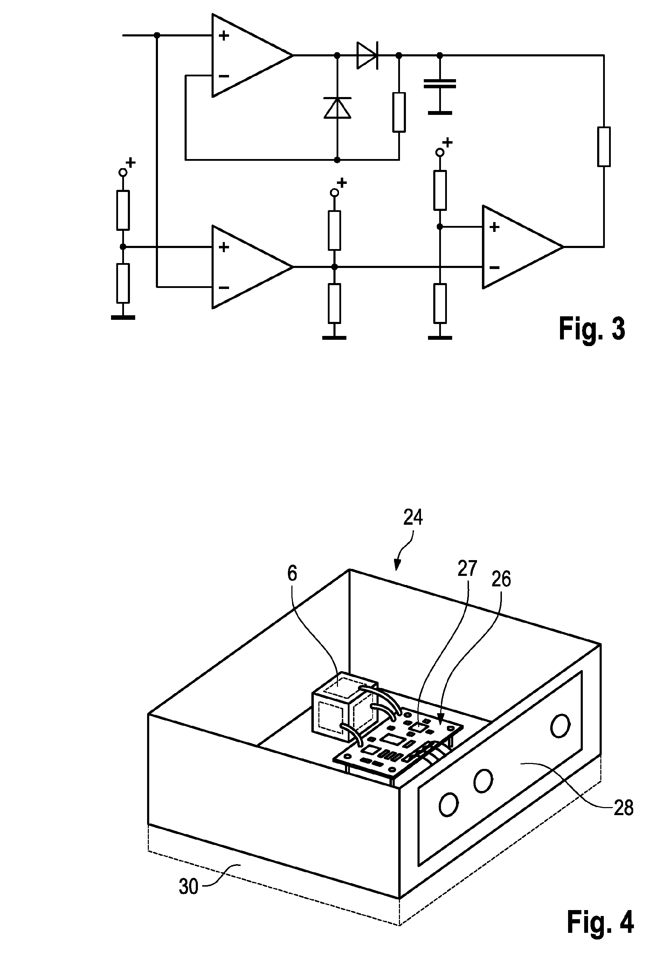

The implementation of such functionality may be based on the very basic circuit depicted in FIG. 3 or on a more sophisticated variant thereof.

The second sensor unit 4 differs from the first one in that the vector magnitude of the horizontal seismic vibrations or displacements is assessed ("horizontal sensor"). Therefore, two accelerometers 6 for two (or more) independent horizontal axes (or alternatively two accordingly aligned axes of a 2- or 3-axis accelerometer) are used. Each one is connected to an input stage of its own, each comprising a buffer amplifier 10, a band-pass filter 12 and an absolute-value converter 14 as described above. Further downstream in the signal chain the pre-conditioned signals corresponding to the horizontal axes are analyzed with respect to the vector magnitude in a vector magnitude unit 22.

The assessment is preferably implemented as a weighted sum of individual signal components belonging to the different horizontal axes, thus avoiding the need to draw a square-root. The approximate calculations can be performed by a circuit with standard analog components such as operational amplifiers, diodes, resistors, etc. If needed, the precision of the assessment can be improved by additional (auxiliary) horizontal sensor axes.

The resulting signal which approximately represents the vector magnitude of the horizontal vibrations or displacements is then fed into a peak-hold circuit 18 of the kind described above with respect to the first sensor unit.

Again, the output signal of the peak-hold circuit 18 is finally transformed into a 4 - 20 mA signal in an output stage 20 and provided to the reactor protection system (output signal 04). The separate x- and y-components may nevertheless be used for digital recording and analysis systems that are independent from the safety-classified trigger part. To this end, auxiliary output stages 16 for both components are provided (output signals 03 and 05).

An alarm relay output may also be provided via suitable interfaces as indicated in the lower part of FIG. 1. In this subsystem the pre-processed signals provided at interface connectors A and B of the individuals channels (vertical and combined horizontal) are processed by comparing them individually against a threshold by a respective threshold comparator 40 and then combining the outputs via logic OR operation. The output of the OR-gate 42 is then fed into a relay hold circuit 44 of the reactor protection system.

The sensor unit(s) and the respective digitizing and recording unit may reside within one case, preferably of steel as aluminum is usually not allowed within the containment of a reactor. Such a sensor box 24 is depicted schematically in FIG. 4. A MEMS- (micro-electro-mechanical) type sensor / accelerometer 6 for one or more axes is fixed to the wall of the sensor box 24. Furthermore, a printed circuit board 26 containing the needed electronics for the operations described above is arranged inside the sensor box 24 with the help of shock-absorbent mounts. Alternatively or additionally an (auxiliary) MEMS-type sensor 27 may be fixed to the printed circuit board 26. Suitable cables lead to a connector panel 28 with outside connectors, e.g. of BNC (Bayonet Neill-Concelman or Baby N Connector) type. The connector panel 28 may also contain power supply connectors, LEDs for signaling various operational states etc. Optionally, a levelling plate 30 may be placed underneath the bottom of the sensor box 24.

As explained before, the sensor units are used for monitoring and shutdown applications in a nuclear power plant. Such combined applications may nevertheless use different sensor units and/or different accelerometers as the requirements with regard to dynamic range and sensitivity may greatly differ.

Of course, it is also possible to apply the sensor units according to the invention in other technical areas, i.e. in seismic alarm or shutdown systems outside the nuclear context.

In advancement to the implementation depicted in FIG. 1 the emergency shutdown system 2 may comprise one or several of the following aspects:
- A configuration of diverse and/or redundant sensor connections and/or sensors, such as e.g. piezo-based and MEMS.
- A switchboard in the signal chain that allows to swap axes and/or accelerometer configurations, e.g. for differentiation between floor and wall mount.
- Switches or control elements that allow to bypass filter stages to cater for periodic self-tests, preferably using standardized (e.g. DC) test signals to be fed through the measurement chain.
- Switches or control elements that allow to set a sensitivity with e.g. the help of wire bridges to adjust the desired plant shutdown levels relative to the maximum signal output levels, e.g. due to locally different regulatory constraints.
- A seismic sensor with some self-monitoring capabilities (e.g. power supply, cover open) that switches off a 4-20 mA output to indicate an error by the then existing 0 mA output without an additional line.
- Some parts of the system may be implemented for 4 axes - this can be used in the context of periodic tests. The idea here is: The sensor unit can be moved in an undefined way and this movement is registered by e.g. 3 axes (piezo accelerometer) plus 1 axis (MEMS accelerometer). If an external (or integrated) comparator circuit compares these signals and if they are sufficiently similar, it can safely be assumed that the accelerometer properties (e.g. sensitivity) of at least the redundant axis is still fine as the failure modes between piezo and MEMS sensor types are different.

### List of reference symbols

- 2: emergency shutdown system
- 4: seismic sensor unit
- 6: accelerometer (sensor)
- 8: trigger module
- 10: buffer amplifier
- 12: band-pass filter
- 14: absolute value converter
- 16: auxiliary output stage
- 18: peak-hold circuit
- 20: output stage
- 22: vector magnitude unit
- 24: sensor box
- 26: printed circuit board
- 27: sensor
- 28: connector panel
- 30: levelling plate
- 40: threshold comparator
- 42: OR gate
- 44: relay hold circuit

- X: input signal
- Y: output signal

## Claims

1. Seismic sensor unit (4) for an emergency shutdown system (2) of a nuclear power plant, comprising
• at least one accelerometer (6) for at least one axis,
• a trigger module (8) which processes a signal derived from a measured signal of said accelerometer (6) and generates an output signal from which a trip signal is derived,
**characterized in that**
said trigger module (8) comprises a peak-hold circuit (18) realized by discrete electronic components processing an input signal (X) and generating an output signal (Y) with the following properties:
• if the input signal (X) is rising and the level of the output signal (Y) is below the level of the input signal (X), the output signal (Y) increases almost instantly with the input signal (Y),
• if the level of the input signal (X) is below the level of the output signal (Y), the output signal (Y) essentially keeps the current level unless a reset condition is reached.

2. Seismic sensor unit (4) according to claim 1, wherein the reset condition is defined such that the input signal (X) stays below a given threshold (mₜ) for a certain amount of time (Δt) which lies in the order of seconds.

3. Seismic sensor unit (4) according to claim 1 or 2, wherein the output signal (Y) is set to the level of the input signal (X) when the reset condition is reached.

4. Seismic sensor unit (4) according to any of the claims 1 to 3 with a number of accelerometers (6) for at least two independent horizontal axes, configured such that the magnitude of the vector sum of the horizontal acceleration is at least approximately derived and subsequently processed within the trigger module (8).

5. Emergency shutdown system (2) of a nuclear power plant with a plurality of seismic sensor units (4) according to any of the claims 1 to 4, configured such that a trip signal is generated if the sum of the individual output signals (02, 04) exceeds a pre-defined threshold.
